# EUROPÄISCHE PATENTSCHRIFT

(11) **EP 0 529 750 B1**
(45) Veröffentlichungstag und Bekanntmachung des Hinweises auf die Patenterteilung: **05.06.1996**
(21) Anmeldenummer: 92250204.2
(22) Anmeldetag: 07.08.1992
(51) Int. Cl.: H02H 3/44

(54) **Verfahren zur Steuerung von Überstromauslösern für Gleichstrom-Schnellschalter**
Control method for overcurrent trip devices in dc circuit breakers
Procédé de contrôle pour déclencheurs de surintensité pour disjoncteurs de courant continu

(30) Priorität: 30.08.1991 DE 4129258
(43) Veröffentlichungstag der Anmeldung: 03.03.1993
(73) Patentinhaber: SIEMENS AKTIENGESELLSCHAFT, D-80333 München (DE)
(72) Erfinder: Röhl, Wolfgang, W-1000 Berlin 27 (DE)

(56) Entgegenhaltungen:
- DE-A- 2 653 574
- US-A- 3 914 667

## Beschreibung

Die Erfindung betrifft ein Verfahren zur Steuerung eines Überstromauslösers eines Gleichstrom-Schnellschalters, insbesondere für Stromversorgungseinrichtungen elektrischer Schienenfahrzeuge, mit einem Wandler im Gleichstromkreis und einer nachgeschalteten Filtereinrichtung zur Gewinnung einer Eingangsspannung, aus der ein von der Steilheit des Stromanstieges abhängiges Signal sowie ein der sprungartigen Änderung des Stromes entsprechendes Signal abgeleitet wird und hieraus über parallele Signalauswerteeinrichtungen in Verbindung mit einem Stromanstiegszeitsteller ein erstes Abschaltsignal und in Verbindung mit einem Stromsprungsteller ein zweites Abschaltsignal für den Gleichstrom-Schnellschalter bereitstellbar sind.

Ein Verfahren der genannten Art ist durch den Aufsatz "Neues Streckenschutzkonzept gegen Speiseleitungsstörungen bei Gleichstrom-Verkehrsnetzen" in der DE-Zeitschrift Brown Boveri Mitteilungen 9/10-83, Seiten 372 bis 378 bekanntgeworden. Das eine der dort beschriebenen Schutzgeräte benutzt als Auslöseprinzip die Höhe von Stromsprüngen Δ I und parallel hierzu den Stromanstieg di/dt als Funktion der Zeit. Trotz dieser kombinierten Anwendung von Erfassungskriterien des Stromes kann die Zuverlässigkeit des Auslöseverfahrens unbefriedigend sein, wenn dem in der Stromversorgungseinrichtung fließenden Strom Störungen überlagert sind. Solche Störungen können insbesondere mit der üblichen Arbeitsweise von Gleichrichterwerken verknüpft sein, aus denen die Schienenfahrzeuge gespeist werden. Dies hängt damit zusammen, daß der für den Betrieb der Schienenfahrzeuge benötigte Gleichstrom durch Gleichrichtung aus einem dreiphasigen Wechselstromnetz erzeugt wird. Dem über die Schienenfahrzeuge fließenden

Gleichstrom überlagert sich daher eine Welligkeit, die auch von dem Schutzgerät erfaßt wird.

Hiervon ausgehend liegt der Erfindung die Aufgabe zugrunde, das eingangs genannte Verfahren zur Steuerung eines Überstromauslösers in der Weise zu verbessern, daß eine überlagerte Welligkeit des Gleichstromes nicht zu einer fehlerhaften Auslösung des Gleichstrom-Schnellschalters führt.

Diese Aufgabe wird gemäß der Erfindung dadurch gelöst, daß die Filtereinrichtung zur Eliminierung von Störspannungen im Bereich ≥ 300 Hz bemessen ist und daß die Eingangsspannung der Signalauswerteeinrichtung für den Stromanstieg zusätzlich unter Umgehung der Filtereinrichtung zuführbar ist.

Dadurch, daß die Eingangsspannung die Signalauswerteeinrichtung für den Stromanstieg auf zwei verschiedenen Wegen erreichen kann, wird vermieden, daß die Auslösung des Gleichstrom-Schnellschalters grundsätzlich durch die unvermeidliche Laufzeit des zu verarbeitenden Signals in der Filtereinrichtung verzögert wird. Der parallel zu der Filtereinrichtung bestehende Weg für die Eingangsspannung kann nämlich so bemessen werden, daß bei einem sehr steilen Stromanstieg das ungefilterte und daher auch unverzögerte Signal zu der Signalauswerteeinrichtung gelangt, während bei einem langsameren Anstieg des Stromes das gefilterte Signal ausgewertet wird. In diesem Fall ist die Verzögerung des Signals durch die Filtereinrichtung nicht störend, weil bei geringer Steilheit des Stromanstieges ohnehin längere Auslösezeiten vorgesehen sind, welche die Laufzeit in der Filtereinrichtung mehrfach übertreffen können.

Die Erfindung wird anhand eines Schaltungsauszuges näher erläutert, in dem nur die zum besseren Verständnis notwendigen Schalteinrichtungen dargestellt sind.

Von einem nicht dargestellten Wandler im Gleichstromkreis einer Stromversorgungseinrichtung für Bahnen wird die Eingangsspannung ESP durch den Wandler-Stromsteller WSS strombegrenzt und mit dem Stromanstiegssteller SAS die Stromsteilheit für den Auslösevorgang des Überstromauslösers vorgegeben. Der Meßstrom wird über die Operationsverstärker OP... der zentralen Impulsformeinrichtung IFZ zugeführt und gelangt von dort zur Signalauswerteeinrichtung SA1. Der Signalauswerteeinrichtung SA1 ist der Stromsprungzeitsteller SAZ zugeordnet, mit dem die maximale Einwirkzeit zur Steuerung der Überstromauslöser festgelegt werden kann. Die Impulsformeinrichtung IF1 ist ausgangsseitig mit einer nicht bezeichneten Schaltstufe verbunden, von der aus über den Anschluß AL1 ein Überstromauslöser ansteuerbar ist.

Parallel zum oben beschriebenen Vorgang wird die Eingangsspannung ESP zusätzlich einer Störspannungen elimierenden Filtereinrichtung FE... zugeführt, deren Ausgang ebenfalls auf die zentrale Impulsformeinrichtung IFZ und die Signalauswertung SA1 einwirkt. Mit der Filtereinrichtung FE... werden die in Bahnnetzen häufig vorkommenden Störspannungen eliminiert, die von den Gleichrichterwerken ausgehen. Hierdurch wird erreicht, daß die Stromsteilheit der Störspannungen bei der Bewertung der durch die Fahrströme bedingten Eingangsspannung ESP bzw. den daraus resultierenden Meßstrom unberücksichtigt bleibt.

Bei der Auswertung der Eingangsspannung ESP ist weiterhin der Stromsprungsteller SSS vorgesehen, der Stromsprünge über dem eingestellten Wert auf die zweite Signalauswerteeinrichtung SA2 führt, die beim Andauern über die vom Stromsprungzeitsteller SSZ einstellbaren Zeit die Ansteuerung des zweiten Überstromauslösers über den Anschluß AL2 bewirkt. Die nicht dargestellten Überstromauslöser wirken unabhängig voneinander.

Unabhängig von dem oben beschriebenen Verfahren zur Steuerung der Überstromauslöser führt ein manuell steuerbares Auslösesignal vom Anschluß ALS ebenfalls zur Ansteuerung der Überstromauslöser.

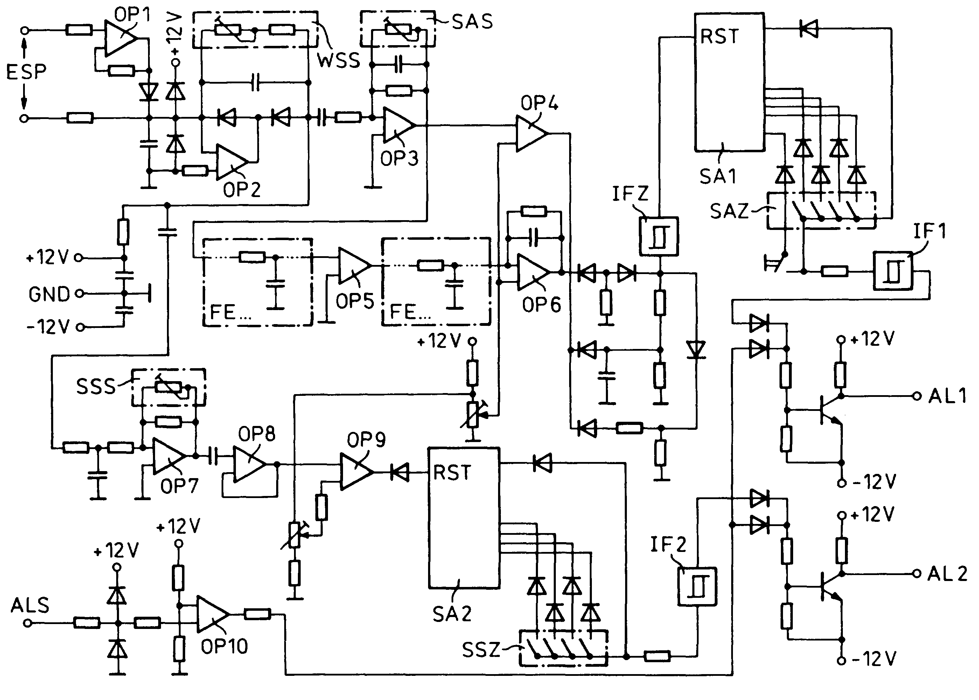

## Patentansprüche

1. Verfahren zur Steuerung eines Überstromauslösers eines Gleichstrom-Schnellschalters, insbesondere für Stromversorgungseinrichtungen elektrischer Schienenfahrzeuge, mit einem Wandler im Gleichstromkreis und einer nachgeschalteten Filtereinrichtung (FE..) zur Gewinnung einer Eingangsspannung (ESP), aus der ein von der Steilheit des Stromanstieges (di/dt) abhängiges Signal sowie ein der sprungartigen Änderung des Stromes (Δ I) entsprechendes Signal abgeleitet wird und hieraus über parallele Signalauswerteeinrichtungen (SA1, SA2) in Verbindung mit einem Stromanstiegszeitsteller (SAZ) ein erstes Abschaltsignal (AL1) und in Verbindung mit einem Stromsprungsteller (SSS) ein zweites Abschaltsignal (AL2) für den Gleichstrom-Schnellschalter bereitstellbar sind,
**dadurch gekennzeichnet,**
daß die Filtereinrichtung (FE..) zur Eliminierung von Störspannungen im Bereich ≥ 300 Hz bemessen ist und daß die Eingangsspannung (ESP) der Signalauswerteeinrichtung für den Stromanstieg (SA1) zusätzlich unter Umgehung der Filtereinrichtung (FE..) zuführbar ist.

## Claims

1. Method for controlling an overcurrent release of a high-speed DC circuit-breaker, in particular for power supply devices of electric rail vehicles, having a converter in the DC circuit and a downstream-connected filter device (FE..) for obtaining an input voltage (ESP), from which input voltage a signal which is a function of the gradient of the current rise (di/dt) and a signal which corresponds to the abrupt change in the current (Δ I) are derived, and it being possible to provide therefrom via parallel signal evaluation devices (SA1, SA2) in conjunction with a current rise-time controller (SAZ) a first switching-off signal (AL1) and in conjunction with a current step-function controller (SSS) a second switching-off signal (AL2) for the high-speed DC circuit-breaker, characterized in that the filter device (FE..) is dimensioned to eliminate interference voltages in the region ≥ 300 Hz and in that the input voltage (ESP) can in addition be fed to the signal evaluation device for the current rise (SA1) by bypassing the filter device (FE..).

## Revendications

1. Procédé de commande d'un déclencheur de surintensité d'un disjoncteur ultra-rapide à courant continu, notamment pour des dispositifs d'alimentation en courant de véhicules ferroviaires électriques, par un transformateur dans le circuit de courant continu et un dispositif (FE ...) de filtre branché en aval et destiné à l'obtention d'une tension (ESP) d'entrée, à partir de laquelle on obtient un signal dépendant de la pente de la montée (di/dt) de courant ainsi qu'un signal correspondant au changement brusque du courant (ΔI) et on peut tenir prêt, à partir de ces signaux, par l'intermédiaire de dispositifs (SA1, SA2) parallèles d'exploitation des signaux en relation avec un dispositif (SAZ) de réglage de temps de montée du courant un premier signal (AL1) de coupure et, en relation avec un dispositif (SSS) de réglage de saut de courant un second signal (AL2) de coupure pour le disjoncteur ultra-rapide à courant continu,
caractérisé en ce que
on prévoit le dispositif (FE ...) de filtrage pour l'élimination de tensions parasites dans le domaine de fréquences supérieures ou égales à 300 Hz et on peut envoyer la tension (ESP) d'entrée au dispositif d'exploitation de signaux pour la montée (SA1) du courant, en supplément en contournant le dispositif (FE ...) de filtrage.
